# EUROPÄISCHE PATENTANMELDUNG

(11) **EP 1 293 710 A2**
(43) Veröffentlichungstag der Anmeldung: **19.03.2003**
(21) Anmeldenummer: 02016582.5
(22) Anmeldetag: 25.07.2002
(51) Int. Cl.: F16J 15/34

(54) **Dichtring mit axial wirkendem PTFE-Gleitring**

(30) Priorität: 13.09.2001 DE 10145087
(71) Anmelder: Federal-Mogul Sealing Systems Bretten GmbH & Co. KG, 75015 Bretten (DE)
(72) Erfinder: Kapcoe, John, 75015 Bretten (DE)

(57) **Zusammenfassung**

Axial wirkender Dichtring (1, 12, 18) zur Abdichtung einer Welle (3) gegenüber einem Gehäuse, umfassend ein Metallgehäuse (4) an das eine Dichtung angeformt ist, die in Richtung des Gehäuses orientiert ist, und einem in axiale Richtung weisenden Gleitring (6, 6',15, 20) aus PTFE, der ein im wesentlichen rechteckiges Profil aufweist, mit einer radial nach innen und einer radial nach außen weisenden Umfangsoberfläche (9), die sich im wesentlichen parallel zur Achse des Dichtrings (1, 12, 18) erstrecken, wobei der Gleitring (6, 6',15, 20) mittels eines Kunststoffes (5, 5', 14), der an das Metallgehäuse angeformt ist, elastisch aufgenommen sowie kraft- und formschlüssig (7, 7') verbunden ist.

## Beschreibung

Die Erfindung beschreibt einen axial wirkenden Dichtring zur Abdichtung einer Welle gegenüber einem Gehäuse, umfassend ein Metallgehäuse an das eine Dichtung angeformt ist, die in Richtung des Gehäuses orientiert ist, und einen in axiale Richtung weisenden Gleitring aus Polytetrafluorethylen (PTFE), der ein im wesentlichen rechteckiges Profil aufweist, mit einer radial nach innen und einer radial nach außen weisenden Umfangsoberfläche, die sich im wesentlichen parallel zur Achse des Dichtrings erstrecken.

Dichtringe werden zum größten Teil zwischen einer rotierenden Welle und einem stationären Gehäuse, wie beispielsweise einem Motorblock oder einem Maschinengestell, eingesetzt. Um den Anforderungen, wie Wärmedehnungen oder Bewegungen der Wellen, gerecht zu werden sind verschiedenste Varianten von Dichtringen gebräuchlich. Insbesondere axiale Bewegungen können von starren Dichtelementen nicht aufgenommen werden.

Eine axial wirkende Dichtung, die Bewegungen ausgleichen kann ist aus der DE 11 00 410 bekannt. Der Gleitring hat dabei ein rechteckiges Profil und liegt mit einer in axialer Richtung weisenden Gleitfläche an der Gegenfläche an. Dabei wird der aus PTFE bestehende Gleitring über ein Federelement kontinuierliche gegen die Gleitfläche gepreßt. Die Dichtung besitzt weiterhin eine radial wirkende Dichtlippe. Nachteilig bei dieser Art der axialen Abdichtung sind der hohe konstruktive Aufwand und die damit verbundenen hohen Herstellungskosten.

Eine konstruktiv günstigere Ausführung wird in dem deutschen Patent DE 38 29 702 C2 aufgezeigt. Das Patent beschreibt eine Gleitringdichtung zur Abdichtung einer Welle gegen ein Gehäuse, umfassend einen durch den Druck P des abzudichtenden Mediums an eine sich im wesentlichen in radialer Richtung erstreckende, relativ verdrehbare Gegenfläche angepreßten Gleitring aus PTFE, der ein im wesentlichen rechteckig begrenztes Profil aufweist. Der Gleitring ist mit einer bei seiner Herstellung angeformten, das Profil axial in Richtung der Gegenfläche überragenden Dichtkante versehen. Dabei ist die Dichtkante in das Profil des Gegenringes einfederbar. Um auch in Fällen, in denen axiale Relativbewegungen der Gegenfläche auftreten können ein gutes Abdichtungsergebnis zu erzielen, ist außerdem eine Tellerfeder vorgesehen, die in den Spalt zwischen dem Stützring und dem Gehäuse angeordnet ist und so eine sichere Anlage der Dichtkante an der Gegenfläche gewährleistet. Nachteilig ist hierbei, dass sich die relativ kleine Dichtkante schnell abnutzt und somit der Federdruck verringert wird, was wiederum zu Undichtigkeiten führen kann. Die Gleitringdichtung besteht ferner aus mehreren Einzelteilen was sich negativ auf die Montage auswirkt.

Es ist daher Aufgabe der Erfindung die oben genannten Nachteile zu vermeiden und einen kostengünstigen, montagefreundlichen Dichtring zu entwickeln, der in der Lage ist Relativbewegungen zur Welle auszugleichen und der die Vorteile des Polytetrafluorethylen bei minimalem Materialeinsatz nutzt. Diese Aufgabe wird erfindungsgemäß durch den kennzeichnenden Teil des Patentanspruchs 1 gelöst, vorteilhafte Weiterbildungen der Erfindung sind in den Unteransprüchen dokumentiert.

Der erfindungsgemäße Gedanke überwindet die vorgenannten technischen Nachteile dadurch, dass der Gleitring mittels eines Kunststoffes, der an das Metallgehäuse angeformt ist, elastisch aufgenommen sowie kraft- und formschlüssig verbunden ist.

Durch die erfindungsgemäße kraft- und formschlüssige Aufnahme des Gleitringes in den elastomeren Kunststoff ist der Dichtring nun in der Lage den Relativbewegungen der Welle zu folgen. Durch eine gezielte Ausgestaltung des Kunststoffes ist es einerseits möglich die Relativbewegungen der Welle einzuschränken, so dass beispielsweise eine Stabilisierung erreicht wird, und anderseits kann durch die gezielte Ausgestaltung des Kunststoffes den Relativbewegungen der Welle gefolgt werden, so dass große Winkelbewegungen der Welle aufgefangen werden können. Die kraftschlüssige Verbindung kann über ein Angießen, ein Anspritzen oder mittels eines Vulkanisierens erfolgen. Die formschlüssige Verbindung ergibt sich dadurch, dass der elastomere Kunststoff um den Gleitring herum angeordnet ist.

Je nach Anwendungsfall ist es zweckmäßig die gesamte Oberfläche des Metallgehäuses mit einem elastomeren Kunststoff zu überziehen, dies kann funktions- wie auch fertigungsbedingt sein. Funktionsbedingt dann wenn zum Beispiel ein spezielles aggressives Medium abgedichtet werden soll und fertigungsbedingt wenn beispielsweise die Gießformen kostengünstiger gefertigt werden können.

In einer weiteren Ausführungsvariante des Dichtrings wird vorgeschlagen, an der äußeren Umfangsoberfläche des Gehäuses ein Profil anzuformen. Das Profil kann z. B. ein Wellenprofil sein. Das Anbringen eines Profils ermöglicht höhere Preßsitzzugaben, ohne dass Montageschwierigkeiten zu erwarten sind, und besitzt daher auch für Aufnahmen mit größeren Wärmeausdehnungen als Stahl Überdeckungsreserven. Weiterhin wird die Montage erleichtert und die statische Dichtheit verbessert.

Um die Dichtheit, eine ausreichende Schmierung und eine gerichtete Strömung an der Gleitfläche des Gleitrings zu gewährleisten, wird in der Erfindung vorgeschlagen, den Gleitring mit Rillen auszustatten. Diese hydrodynamisch wirkenden Rillen, Nuten oder Vertiefungen bewirken einen Drall, welcher eine definierbare Ölverteilung ermöglicht.

Als Gleitfläche steht dabei in erster Ausführung die Welle zur Verfügung. In einer weiteren Ausgestaltung der Erfindung wird vorgeschlagen, auf der Welle ein L-förmiges Blech anzuordnen. Der radiale Schenkel dieses Bleches kann dann als Gleitfläche und zur Abdichtung dienen. Vorteilhaft ist hierbei, dass dem Gleitring eine stets gleiche Oberfläche entgegensteht, so dass Unebenheiten auf der Gleitfläche die Wirkungsweise des Gleitrings nicht beeinflussen können. Ein weiterer Vorteil ist, dass ein Verschmutzen der Gleitfläche des Dichtringes während der Montage verhindert wird.

Erfindungsgemäß kann an den Gleitring einstückig eine radiale Verlängerung angeordnet sein. Dabei dient die Verlängerung als Staublippe. Der Gleitring aus PTFE dient somit einerseits als Dichtung und andererseits als Fänger für Verunreinigungen und zum Schutz vor Umgebungseinflüssen. Die Verlängerung bietet den zusätzlichen Vorteil, dass sie im Falle von Relativbewegungen der Welle zum Dichtring zur Führung des Gleitrings dienen kann. In einer weiteren Ausgestaltung der Erfindung wird die Staublippe durch den elastomeren Kunststoff gebildet, so dass der Einsatz des kostenintensiven PTFE minimalisiert wird.

Erfindungsgemäße Gestaltungsbeispiele des Dichtringes werden nachstehend anhand von Zeichnungen und im weiteren in der Beschreibung näher erläutert. Es zeigen:
- Figur 1: ein erfindungsgemäßes Ausführungsbeispiel eines Dichtringes,
- Figur 2: einen Ausschnitt II aus Figur 1,
- Figur 3: ein erfindungsgemäßes Ausführungsbeispiel eines Dichtringes mit einer elastomeren Staublippe,
- Figur 4: ein erfindungsgemäßes Ausführungsbeispiel eines Dichtringes mit einem verlängerten Gleitring der als Staublippe fungiert.

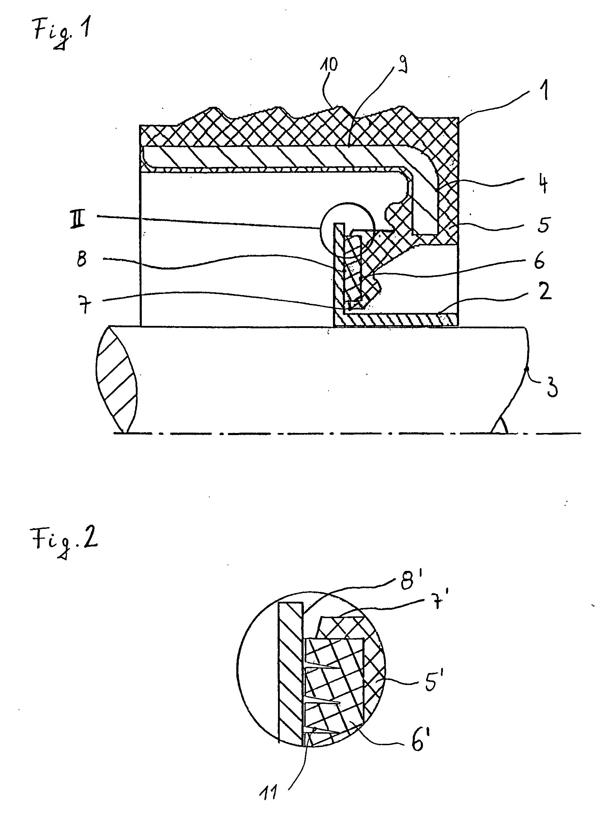

Figur 1 zeigt den Schnitt durch einen Dichtungsring 1 mit einem L-förmigen Blechstreifen 2 der auf einer Welle 3 montiert ist. Der Dichtungsring 1 besteht aus einem Metallgehäuse 4, an das ein elastomerer Kunststoff 5 angeformt ist, einem Gleitring 6 und einem Blechstreifen 2. Dabei wird der Gleitring kraft- und formschlüssig 7 positioniert und gegen die Gleitfläche 8 gepreßt, und die Gleitfläche 8 wird aus dem radialen Schenkel des Blechstreifens 2 gebildet. In diesem Ausführungsbeispiel ist an die gesamte Oberfläche des Metallgehäuses 4 ein elastomerer Kunststoff 5 angeformt, wobei an der äußeren Umfangsoberfläche 9 des Metallgehäuses 4 ein wellenförmiges Profil 10 ausgebildet ist.

Die Vergrößerung eines Ausschnitts II aus Figur 1 zeigt Figur 2. Dargestellt ist die Gleitfläche 8', der Gleitring 6' und der elastomere Kunststoff 5', der die formsschlüssige Verbindung 7' bildet. Hierbei ist der Gleitring 6' ist mit hydrodynamisch wirkenden Rillen 11 ausgestattet, die als Einschnitte oder als geometrisch geformte Nuten (V-förmig, U-förmig, etc.) vorliegen können.

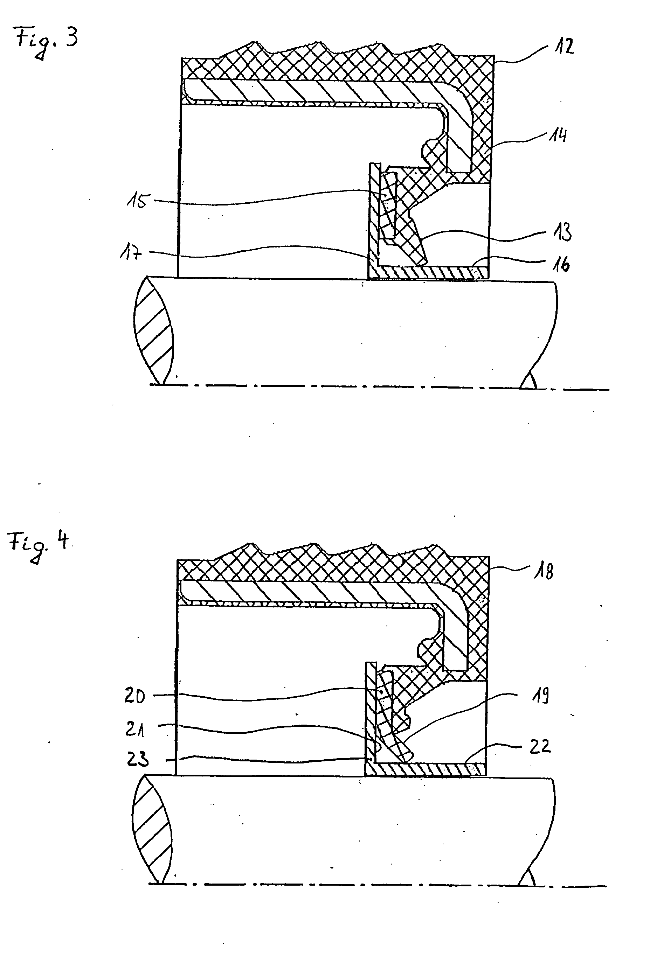

In Figur 3 ist ein Dichtring 12 dargestellt der eine radiale Verlängerung 13 als Staublippe besitzt. Die Verlängerung 13 ist einstückig an den elastomeren Kunststoff 14 des Dichtringes 12 angeformt. Dabei weist die Verlängerung 13 vom Gleitring 15 zum axialen Schenkel 16 des L-förmigen Blechstreifens 17.

In Figur 4 ist ein Dichtring 18 dargestellt der eine radiale Verlängerung 19 als Staublippe besitzt. Die Verlängerung 19 ist einstückig an den Gleitring aus PTFE 20 angeformt. Dabei weist die Verlängerung 19 von der Gleitfläche 21 zum axialen Schenkel 22 des L-förmigen Blechstreifens 23.

## Patentansprüche

1. Axial wirkender Dichtring (1, 12, 18) zur Abdichtung einer Welle (3) gegenüber einem Gehäuse, umfassend ein Metallgehäuse (4) an das eine Dichtung angeformt ist, die in Richtung des Gehäuses orientiert ist, und einem in axiale Richtung weisenden Gleitring (6, 6',15, 20) aus PTFE, der ein im wesentlichen rechteckiges Profil aufweist, mit einer radial nach innen und einer radial nach außen weisenden Umfangsoberfläche (9), die sich im wesentlichen parallel zur Achse des Dichtrings (1, 12, 18) erstrecken, **dadurch gekennzeichnet, dass** der Gleitring (6, 6',15,20) mittels eines Kunststoffes (5, 5', 14), der an das Metallgehäuse angeformt ist, elastisch aufgenommen sowie kraft- und formschlüssig (7, 7') verbunden ist.

2. Axial wirkender Dichtring (1, 12, 18) nach Anspruch 1, **dadurch gekennzeichnet, dass** an die gesamte Oberfläche des Gehäuses ein elastomerer Kunststoff (5, 5', 14) angeformt ist.

3. Axial wirkender Dichtring (1, 12, 18) nach einem der Ansprüche 1 und 2, **dadurch gekennzeichnet, dass** der angeformte elastomere Kunststoff (5, 5', 14) an der äußeren Umfangsoberfläche (9) des Metallgehäuses mit einem Profil (10) versehen ist.

4. Axial wirkender Dichtring (1, 12, 18) nach einem der Ansprüche 1 bis 3, **dadurch gekennzeichnet, dass** der Gleitring (6, 6',15, 20) mit hydrodynamisch wirkenden Rillen (11) ausgestattet ist.

5. Axial wirkender Dichtring (1, 12, 18) nach einem der Ansprüche 1 bis 4, **dadurch gekennzeichnet, dass** auf der Welle (3) ein L-förmiges Blech (2, 17, 23) angeordnet ist, wobei der radiale Schenkel dem Gleitring zur Abdichtung dient.

6. Axial wirkender Dichtring (1, 12, 18) nach einem der Ansprüche 1 bis 5, **dadurch gekennzeichnet, dass** der Gleitring (6, 6',15, 20) eine radiale Verlängerung (19) besitzt, so dass eine Staublippe gebildet ist.

7. Axial wirkender Dichtring (1, 12, 18) nach einem der Ansprüche 1 bis 5, **dadurch gekennzeichnet, dass** die elastische Aufnahme des Gleitrings (6, 6',15, 20) eine radiale Verlängerung (13) besitzt, so dass eine Staublippe gebildet ist.
